Europäisches Patentamt

European Patent Office

Office européen des brevets

(11) Veröffentlichungsnummer: **0 292 866**
**A2**

(12) **EUROPÄISCHE PATENTANMELDUNG**

(21) Anmeldenummer: **88108008.9**

(51) Int. Cl.4: **B65F 3/04**

(22) Anmeldetag: **19.05.88**

(30) Priorität: **23.05.87 DE 8707422 U**

(43) Veröffentlichungstag der Anmeldung:
**30.11.88 Patentblatt 88/48**

(84) Benannte Vertragsstaaten:
**AT BE CH DE ES FR GB IT LI LU NL SE**

(71) Anmelder: **Pontech Gesellschaft für technologische Entwicklungen mbH**
**Borgfelder Heerstr. 50**
**D-2800 Bremen(DE)**

(72) Erfinder: **Garbarde, Rolf, Dipl.-Ing.**
**Am Schiffgraben 6B**
**D-2804 Lilienthal(DE)**
Erfinder: **Schreier, Hans Hermann, Dr.**
**Bogenstrasse 12**
**D-2900 Oldenburg(DE)**
Erfinder: **Kahle, Hans Joachim, Dipl.-Biologe**
**Trakehnerstrasse 14**
**D-2900 Oldenburg(DE)**
Erfinder: **Jabbusch, Wolfgang, Dr., Dipl.-Ing.**
**Achterdiek 53**
**D-2900 Oldenburg(DE)**

(74) Vertreter: **Jabbusch, Wolfgang, Dr. et al**
**Elisabethstrasse 6**
**D-2900 Oldenburg(DE)**

(54) **Vorrichtung zum gewichtsmässigen Erfassen von Material, vorzugsweise Müll, an einem Sammelfahrzeug.**

(57) Die Erfindung betrifft eine Vorrichtung zum gewichtsmäßigen Erfassen von Material, vorzugsweise Müll, in einem Behälter, der in die Behälteraufnahme einer an einem Sammelfahrzeug angeordneten Entleerungsvorrichtung eingesetzt und von dieser unter Hoch- und Überkopfschwenken in das Sammelfahrzeug entleert wird, wobei die Behälteraufnahme an einem Tragorgan der Entleerungsvorrichtung angeordnet und gegenüber diesem längsverschiebbar ist und mit einer Wiege-Meßzelle in Wirkverbindung steht.

Der Erfindung liegt die Aufgabe zugrunde, eine Anordnung zu finden, bei der die Behälteraufnahme beim Wiegevorgang gegenüber dem tragenden Teil der Vorrichtung, dem Tragorgan, ohne Gleitberührung verschiebbar ist, wobei die Ausführung entsprechend dem rauhen Betrieb an einem Müllfahrzeug gleichzeitig optimale Robustheit aufweisen soll.

Diese Aufgabe ist dadurch gelöst worden, daß die Behälteraufnahme und das Tragorgan, das vorzugsweise als Tragrohr ausgebildet ist, miteinander über federelastische Elemente verbunden sind, die bei Gewichtsbelastung der Behälteraufnahme eine Parallelverschiebung von Behälteraufnahme und Tragorgan zulassen.

Fig. 1

## Vorrichtung zum gewichtsmäßigen Erfassen von Material, vorzugsweise Müll, an einem Sammelfahrzeug

Die Erfindung betrifft eine Vorrichtung zum gewichtsmäßigen Erfassen von Material, vorzugsweise Müll, in einem Behälter, der in die Behälteraufnahme einer an einem Sammelfahrzeug angeordneten Entleerungsvorrichtung eingesetzt und von dieser unter Hoch- und Überkopfschwenken in das Sammelfahrzeug entleert wird, wobei die Behälteraufnahme an einem Tragorgan der Entleerungsvorrichtung angeordnet und gegenüber diesem längsverschiebbar ist und mit einer Wiege-Meßzelle in Wirkverbindung steht.

Eine Vorrichtung dieser Gattung ist in dem Patent 34 47 648 beschrieben. Bei dieser bekannten Vorrichtung ist die Behälteraufnahme mit einem in der Wiegeeinrichtung verschiebbar angeordneten Gleitstück verbunden, das seinerseits mit einer Wiege-Meßzelle in Wirkverbindung steht. Die Vorrichtung arbeitet derart, daß sich das Gleitstück beim Wiegevorgang infolge des an der Behälteraufnahme angreifenden Behältergewichtes in der Wiegeeinrichtung gegen die Meßzelle verschiebt, worauf die Meßzelle den Wiegewert über einen Meßverstärker an eine Registriereinheit weiterleitet. Diese Ausbildung weist noch den Nachteil auf, daß beim Wiegevorgang zwischen dem Gleitstück und seiner Gleitführung Reibungswiderstände auftreten, welche die Meßgenauigkeit des Wiegevorganges ungünstig beeinflussen.

Der Erfindung liegt die Aufgabe zugrunde, diesen sich aus der Verwendung einer Gleitführung ergebenden Nachteil zu vermeiden und eine Anordnung zu finden, bei der die Behälteraufnahme beim Wiegevorgang gegenüber dem tragenden Teil der Vorrichtung, dem Tragorgan, ohne Gleitberührung verschiebbar ist, wobei die Ausführung entsprechend dem rauhen Betrieb an einem Müllfahrzeug gleichzeitig optimale Robustheit aufweisen soll.

Diese Aufgabe ist erfindungsgemäß dadurch gelöst worden, daß die Behälteraufnahme und das Tragorgan, das vorzugsweise als Tragrohr ausgebildet ist, miteinander über federelastische Elemente verbunden sind, die bei Gewichtsbelastung der Behälteraufnahme eine Parallelverschiebung von Behälteraufnahme und Tragorgan zulassen.

Diese Ausbildung bietet den Vorteil der berührungslosen Verschiebbarkeit der Behälteraufnahme gegenüber dem Tragorgan während des Wiegevorganges. Dabei ist die Verbindung der Behälteraufnahme mit dem Tragorgan mittels federelastischen Elementen besonders vorteilhaft, weil solche Elemente einerseits bei entsprechender Einstellung aufgrund ihrer Elastizität die Gewichtsbelastung beim Wiegevorgang gut übertragen und andererseits robuste Bauelemente darstellen, die gegen Witterungseinflüsse, Schmutzeinflüsse und dergleichen weitgehend unempfindlich sind und außerdem keiner besonderen Wartung bedürfen.

Nach einer Weiterbildung der Erfindung ist die Behälteraufnahme mit einem Tragkörper verbunden, der das Tragrohr lose umgreift und sind die federbelasteten Elemente an den oberen und unteren Enden von Tragkörper und Tragrohr angeordnet. Dabei kann die Ausbildung weiterhin so gewählt werden, daß die federelastischen Elemente durch Federbleche gebildet sind, die am oberen und am unteren Ende von Tragkörper und Tragrohr angeordnet sind und den Tragkörper und das Tragrohr miteinander verbinden. Diese Ausbildung hat noch den Vorteil, daß das Tragrohr oben und unten durch die Federbleche weitgehend ver schlossen wird, wodurch sich ein zusätzlicher Schutz für die in dem Tragrohr angeordnete Meßzelle ergibt. Dabei kann das Tragrohr rechteckigen Querschnitt aufweisen und kann der Tragkörper als U-Rohr um das Tragrohr herumgeführt sein.

In jedem Fall sind der Tragkörper und das Tragrohr stets in einem durch die Federelemente bestimmten Abstand zueinander angeordnet, so daß bei der beim Wiegevorgang eintretenden Parallelverschiebung dieser Bauteile keine Reibungen entstehen.

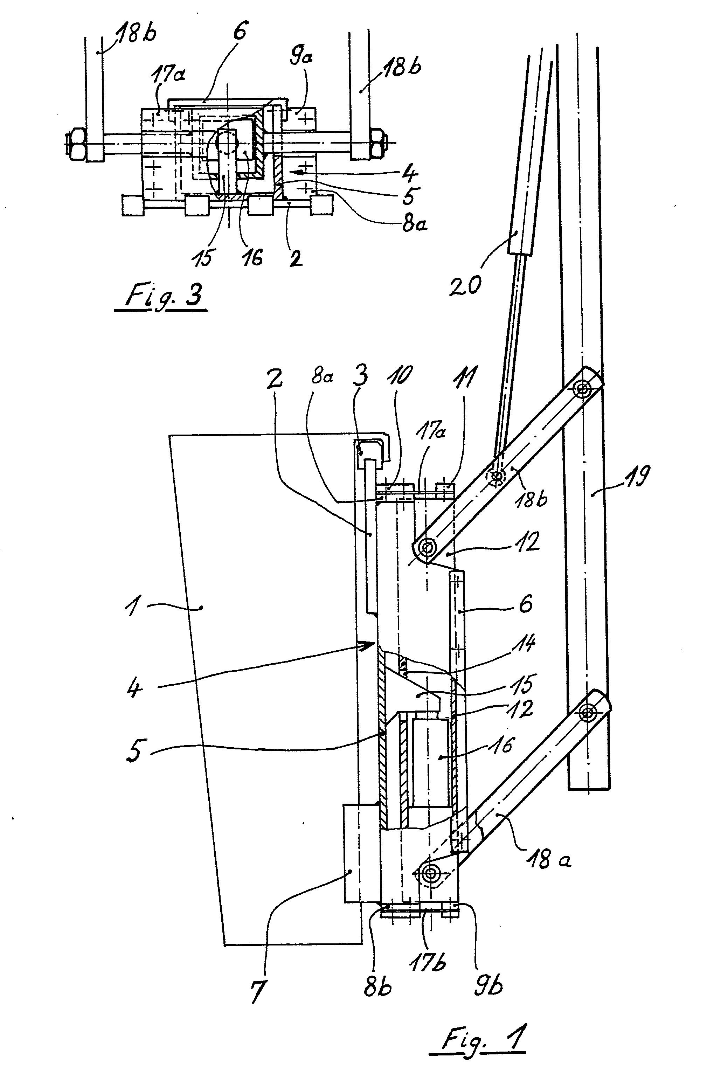

Nach einer Weiterbildung der Erfindung, für die auch selbständiger Schutz beansprucht wird, kann die Ausbildung so getroffen sein, daß mindestens eines der federelastischen Elemente eine Meßzelle ist, die an ihren freien Enden einerseits mit dem Tragkörper und anderseits mit dem Tragrohr verbunden ist. Bei dieser Ausbildung übernimmt die Meßzelle gleichzeitig die Funktion eines Federelements, insbesondere des Federbleches 17b gemäß Ausführungen nach den Fig. 1 bis 3, dient die Meßzelle also zugleich zur Verbindung des U-Rohres 5 des Tragkörpers 4 mit dem Tragrohr 12. Mit dieser Ausbildung wird die Konstruktion weiter vereinfacht, so daß sie weniger Bauteile aufweist und kostengünstiger herstellbar ist. Bei Bedarf kann auch das obere Federblech 17a durch entsprechende Anordnung einer weiteren Meßzelle 21 ersetzt werden.

Es liegt im Rahmen der Erfindung, daß Federelemente jeder geeigneten Konstruktion zum Einsatz kommen können.

Gemäß einer anderen Weiterbildung der Erfindung, für die auch selbständiger Schutz beansprucht wird, kann die Vorrichtung so ausgebildet sein, daß die Behälteraufnahme und das Tragrohr miteinander durch Parallelogrammlenker-Paare verbunden sind, die durch federelastische Elemente in einer Normalstellung gehalten werden. Nach einer Wiege-Auslenkung werden die Parallelogrammlenker von den Federelementen in die Normalstellung zurückgeführt.

Ein Ausführungsbeispiel der Erfindung, aus dem sich weitere erfinderische Merkmale ergeben, ist in der Zeichnung dargestellt. Es zeigen:

Fig. 1 eine Seitenansicht einer Entleerungsvorrichtung mit eingesetztem Müll-Behälter an einem nicht dargestellten Müll-Sammelfahrzeug,

Fig. 2 eine vergrößerte Seitenansicht des oberen Abschnittes der Tragkörper-Tragrohrkombination der Entleerungsvorrichtung gemäß Fig. 1,

Fig. 3 eine Draufsicht auf die Tragkörper-Tragrohrkombination gemäß Fig. 1,

Fig. 4 ein zweites Ausführungsbeispiel der Erfindung und

Fig. 5 die Einzelheit A in Fig. 4 in vergrößerter Darstellung.

Fig. 1 zeigt einen Müll-Behälter 1, der an die Entleerungsvorrichtung (Schüttung) eines nicht dargestellten Müll-Sammelfahrzeuges angesetzt ist. Dabei ist der Behälter 1 in die Behälteraufnahme der Vorrichtung eingesetzt, die eine lotrechte Tragplatte 2 mit oberen Behälterführungen 3 und unteren Behälterführungen 7 hat, die an einem Tragkörper 4 befestigt sind. Der Tragkörper 4 besteht aus einem zum Sammelfahrzeug hin offenen U-Rohr 5, dessen offene Seite mit einer Abdeckung 6 verschlossen ist.

In dem Tragkörper 4 verläuft ein Tragrohr 12 der Entleerungsvorrichtung, das über Parallelogrammlenkerpaare 18a und 18b mit einem schwenkbaren Tragrohr 19 der Entleerungsvorrichtung verbunden ist, wobei zwischen dem Tragrohr 19 und dem oberen Parallelogrammlenkerpaar 18a ein Hubzylinder 20 angeordnet ist. Der Tragkörper 4 hat auf seiner dem Tragrohr 12 zugekehrten Seite einen Übertragungsflansch 15, der durch eine Öffnung 14 in das Tragrohr 12 hineinragt und dort mit einer in dem Tragrohr angeordneten Wiege-Meßzelle 16 in Wirkverbindung steht.

Der Tragkörper 4 und das Tragrohr 12 sind an ihren oberen und unteren Enden miteinander durch Federbleche 17a, 17b verbunden. Dazu weist der Tragkörper 4 oben und unten Halteflansche 8a und 8b auf und besitzt das Tragrohr 12 entsprechend oben und unten Halteflansche 9a und 9b. Insbesondere aus Fig. 2 ist ersichtlich, wie das Federblech 17a auf den Halteflanschen 9a und 8a angeordnet mit Abdeckungen 10 am Tragkörper und Abdeckungen 11 am Tragrohr abgedeckt und mit durch die Abdeckungen, die Federbleche und die Halteflansche hindurchgeführten Schrauben festgesetzt ist. An der Unterseite von Tragkörper und Tragrohr ist die Befestigung des Federbleches 17b entsprechend.

Nach Anheben der Entleerungsvorrichtung senkt sich der Tragkörper 4 bei einem angesetzten Behälter 1 unter dem Einfluß des Behältergewichtes und unter elastischer Verformung der Federbleche 17a, 17b gegenüber dem Tragrohr 12 ab, wobei das Behältergewicht über den Übertragungsflansch 15 von der Meßzelle 16 gemessen wird. Nach Absetzen des Behälters stellt sich der Tragkörper 4 aufgrund der Rückstellkräfte der Federbleche 17a, 17b wieder in seine Ausgangslage zurück, die der Null-Lage der Meßzelle 16 entspricht.

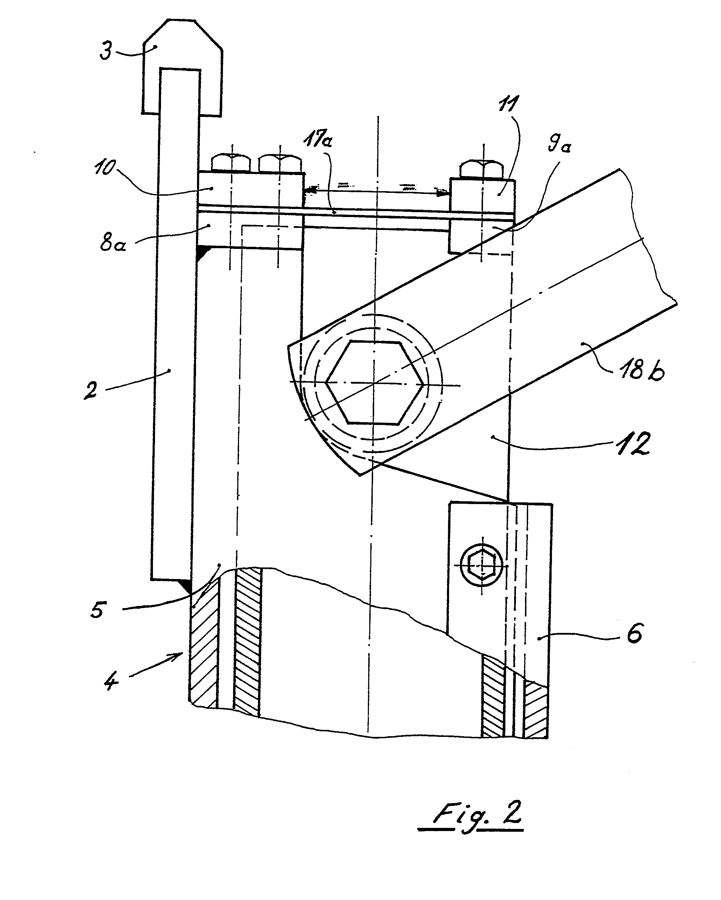

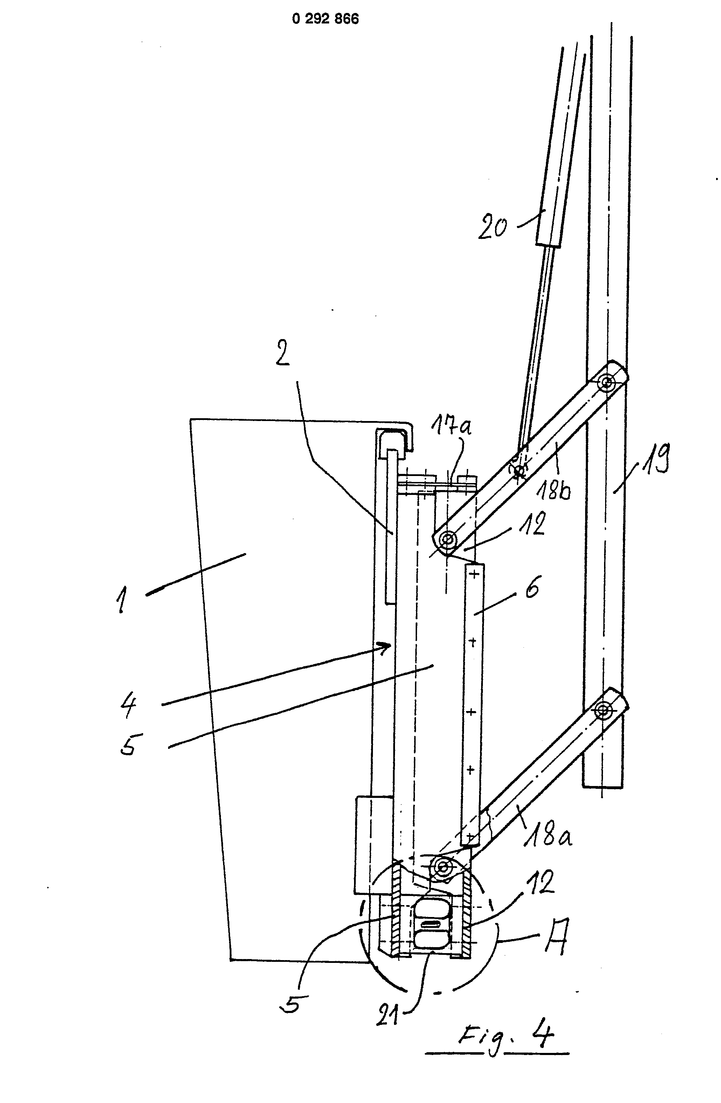

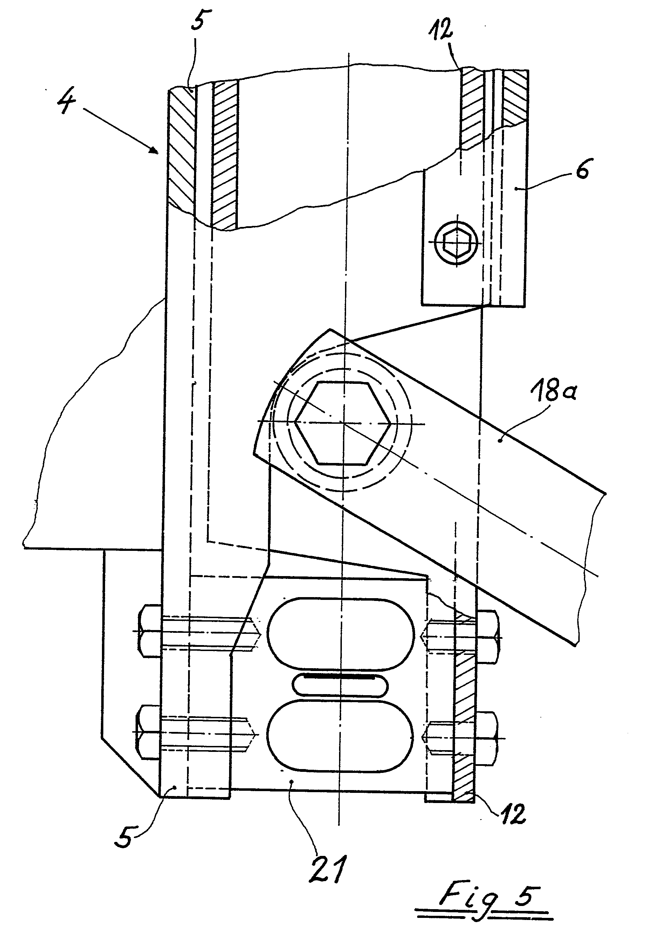

Die Fig. 4 und 5 zeigen eine weitere Ausbildung der Erfindung, wobei für gleiche Teile gleiche Bezugszeichen verwendet sind. Bei dieser Ausführung ist das untere Federblech 17b gemäß der Ausführung nach den Fig. 1 bis 3 durch eine Wiege-Meßzelle 21 ersetzt, die also an ihren Stirnenden einerseits mit dem U-Rohr 5 des Tragkörpers 4 und andererseits mit dem Tragrohr 12 verbunden ist. Damit übernimmt die Meßzelle 21 zusätzlich zur Wiege-Meßfunktion die Funktion der elastischen Halteverbindung zwischen Tragkörper 4 und Tragrohr 12.

## Ansprüche

1. Vorrichtung zum gewichtsmäßigen Erfassen von Material, vorzugsweise Müll, in einem Behälter, der in die Behälteraufnahme einer an einem Sammelfahrzeug angeordneten Entleerungsvorrichtung eingesetzt und von dieser unter Hoch- und Überkopfschwenken in das Sammelfahrzeug entleert wird, wobei die Behälteraufnahme an einem Tragorgan der Entleerungsvorrichtung angeordnet und gegenüber diesem längsverschiebbar ist und mit einer WiegeMeßzelle in Wirkverbindung steht, dadurch gekennzeichnet, daß die Behälteraufnahme und das Tragorgan, das vorzugsweise als Tragrohr ausgebildet ist, miteinander über federelastische Elemente verbunden sind, die bei Gewichtsbelastung der Behälteraufnahme eine Parallelverschiebung von Behälteraufnahme und Tragorgan zulassen.

2. Vorrichtung nach Anspruch 1, dadurch gekennzeichnet, daß die Behälteraufnahme mit einem Tragkörper (4) verbunden ist, der das Tragrohr (12) vorzugsweise lose umgreift, und daß die federelastischen Elemente nahe den oberen und unteren Enden von Tragkörper und Tragrohr angeordnet sind und Tragkörper und Tragrohr miteinander verbinden.

3. Vorrichtung nach Anspruch 2, dadurch gekennzeichnet, daß die federelastischen Elemente durch Federbleche (17a, 17b) gebildet sind, die am oberen und am unteren Ende von Tragkörper (4) und Tragrohr (12) angeordnet sind und den Tragkörper und das Tragrohr miteinander verbinden.

4. Vorrichtung nach Anspruch 2, dadurch gekennzeichnet, daß das Tragrohr (12) rechteckigen Querschnitt aufweist und daß der Tragkörper (4) als ein das Tragrohr dreiseitig umgreifendes U-Rohr (5) ausgebildet ist, das auf der freien Profilseite mit einer Abdeckung (6) abgedeckt ist.

5. Vorrichtung nach Anspruch 4, dadurch gekennzeichnet, daß der Tragkörper (4) und das Tragrohr (12) oben und unten Halteflansche (8a, 8b und 9a, 9b) aufweisen, an denen die Federbleche (17a, 17b) befestigt sind.

6. Vorrichtung nach einem der Ansprüche 2 bis 5, dadurch gekennzeichnet, daß ein am Tragkörper (4) angeordneter Übertragungsflansch (15) durch eine Öffnung (14) in das Tragrohr (12) hineinragt und mit einer im Tragrohr angeordneten Meßzelle (16) in Wirkverbindung steht.

7. Vorrichtung nach Anspruch 2, dadurch gekennzeichnet, daß mindestens eines der federelastischen Elemente eine Meßzelle (21) ist, die an ihren freien Enden einerseits mit dem Tragkörper (4) und andererseits mit dem Tragrohr (12) verbunden ist.

8. Vorrichtung nach Anspruch 1, dadurch gekennzeichnet, daß die Behälteraufnahme und das Tragrohr miteinander durch Parallelogrammlenker-Paare verbunden sind, die durch federelastische Elemente in einer Normalstellung gehalten werden.

Fig. 3

Fig. 1

_Fig. 2_

Fig. 4

*Fig 5*